# EUROPEAN PATENT SPECIFICATION

(11) **EP 2 078 973 B1**
(45) Date of publication and mention of the grant of the patent: **13.02.2013**
(21) Application number: 08171930.4
(22) Date of filing: 17.12.2008
(51) Int. Cl.: G02B 17/08, H01L 33/00, F21S 8/10, F21V 5/00, G02B 3/08

(54) **Bar-shaped LED lighting device**
Stangenförmige LED-Beleuchtungsvorrichtung
Dispositif d'éclairage LED en forme de barre

(30) Priority: 10.01.2008 KR 20080000389 U; 05.12.2008 KR 20080123575
(43) Date of publication of application: 15.07.2009
(73) Proprietor: Wookang Tech. Co., Ltd., Incheon-si 403-030 (KR)
(72) Inventor: Ko, In-Hong, Gangnam-gu, Seoul, 135-270 (KR)
(74) Representative: Gervasi, Gemma

(56) References cited:
- US-A- 2 469 080
- US-A- 4 712 885
- US-A- 5 173 810
- US-A1- 2006 061 999
- US-A1- 2006 209 558
- US-B1- 6 536 923
- US-B1- 7 222 995

## Description

### BACKGROUND OF THE INVENTION

### Field of the Invention

The present invention relates to a bar-shaped LED lighting device.

### Description of the Related Art

In the field of lighting devices, there is a need for a bar-shaped LED lighting device having several advantages, for example, low consumption of electric power, price competitiveness, and maximized lighting effects due to high visibility. Such a kind of LED lighting device is widely applicable as auxiliary headlamps and emergency lamps for vehicles, and the like.

A light emitting diode (hereinafter, referred to as an "LED") is a photoelectric transformation semiconductor device wherein N-type semiconductor crystals, in which a plurality of carriers are electrons, and P-type semiconductor crystals, in which a plurality of carriers are holes, are bonded to each other. That is, an LED is a light emitting semiconductor device using light naturally emitted upon recombination of the electrons and holes of PN-junctions.

By virtue of high photoelectric transformation efficiency thereof, an LED has considerably low consumption of electric power of 5W and thus, low heat generation. Further, an LED does not require preheating and exhibits rapid light-up and light-out because an LED is not designed to emit light via discharge.

An LED, furthermore, has no gas or filaments, and therefore, has excellent shock-resistance and safety. In particular, with adoption of a stable direct-current light-up manner, an LED has advantages including further reduced consumption of electric power, a possibility of repetitive pulse operations, less fatigue of optic nerves, a semi-permanent lifespan and high price competitiveness.

Conventionally, vehicular headlamps are selected from among halogen lamps, xenon lamps, and high-voltage discharge lamps (HID lamps).

A halogen lamp generally has a relatively high rated power consumption of 50W and causes serious consumption of electric power and emission of a great amount of heat. Therefore, when a luminous intensity is increased, such a halogen lamp entails a risk of fire. In addition, the halogen lamp, which has a short lifespan of 5,000 to 6,000 hours, must be frequently exchanged and has poor price competitiveness.

A xenon lamp is configured in such a manner that xenon gas is injected into a bulb. Although the xenon lamp is able to achieve slightly higher brightness than the halogen lamp, such a brightness increase is meager.

A high-voltage discharge lamp is able to achieve a significantly high luminous intensity with low electric power, but suffers from slow light-up because it is lit via discharge.

In addition, a separate voltage stabilizer, which must be used for light-up, increases the price of the high-voltage discharge lamp and also, other auxiliary devices required to operate the lamp makes it difficult to reduce the overall size of the high-voltage discharge lamp.

US 6536923 discloses a bar-shaped lighting device comprising a light emitting diode (LED), a semi-oval reflector, and a lens inserted into the reflector and having center light source hole defined in a rear portion thereof and a cylindrical hole defined in a front portion thereof, the light source hole being defined with a convex portion, in the form of a convex lens, at a position thereof opposite the LED, the convex portion serving to refract and collimate the light emitted forward from the LED, to direct parallel light to the outside through the cylindrical hole in front of the convex portion.

### SUMMARY OF THE INVENTION

Therefore, the present invention has been made in view of the above problems, and it is an object of the present invention to provide a bar-shaped LED lighting device, wherein each light emitting unit constituting the lighting device includes an LED to emit light, a reflector to reflect and collimate the light, emitted laterally from the LED, so as to direct parallel light forward, and a lens to condense the light emitted forward from the LED while directing the reflected parallel light from the reflector forward, thereby allowing the light emitted from the LED to reach a more remote position.

In accordance with the present invention, the above and other objects can be accomplished by the provision of a bar-shaped LED lighting device according to claim 1.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is an exploded perspective view of a light emitting unit for use in a lighting device in accordance with an arrangement that does not form part of the present invention;
FIG. 2A is a sectional view illustrating an assembled light emitting unit in which a lens having a flat-plane-shaped front surface is used in accordance with an arrangement that does not form part of the present invention;
FIG. 2B is a sectional view illustrating an assembled light emitting unit in which a lens having a convexly-curved front surface is used in accordance with an embodiment of the present invention;
FIG. 2C is a sectional view illustrating an assembled light emitting unit in which a lens having a concavely-curved front surface is used in accordance with a further embodiment of the present invention; and
FIG. 3 is a perspective view illustrating the entire configuration of a bar-shaped LED lighting device in accordance with an arrangement that does not form part of the present invention.

### DETAILED DESCRIPTION OF THE INVENTION

The terms and words used in the following description and the accompanying drawings should not be limited and analyzed according to conventional or dictionary definitions, but should be analyzed according to the means and concepts suitable to the technical ideas of the present invention on the basis of the principle that the inventor(s) of the present invention can appropriately define the concepts of terms in order to explain the present invention in the best manner.

Accordingly, embodiments described hereinafter and configurations shown in the accompanying drawings are only the most preferred embodiments of the present invention and do not represent all the technical ideas of the present invention and therefore, it should be appreciated that there may be a variety of equivalents and variants capable of substituting for the embodiments at the filing stage of the present invention.

Hereinafter, exemplary embodiments of the present invention will be described in detail with reference to the accompanying drawings.

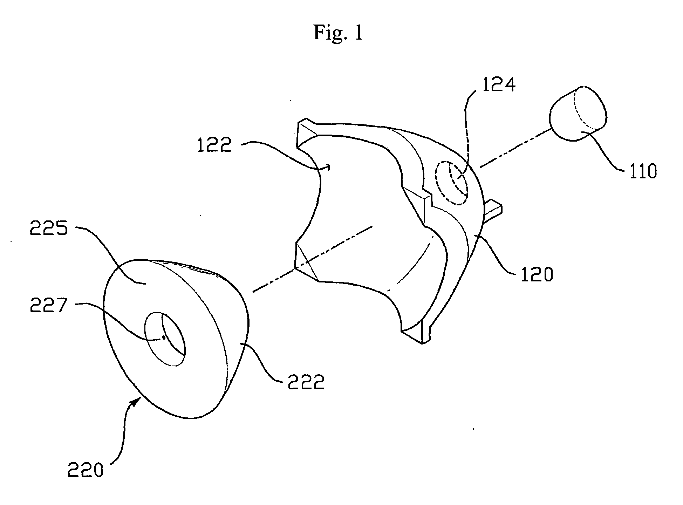

FIG. 1 is an exploded perspective view of a light emitting unit for use in a lighting device in accordance with an arrangement that does not form part of the present invention.

Referring to FIG. 1 illustrating respective constituent elements of a light emitting unit for use in a lighting device in an exploded perspective view, it can be appreciated that the light emitting unit consists of an LED 110, a reflector 120, and a lens 220.

The LED 110 is used to emit light upon receiving electric power. Preferably, the LED 110 is a high-output LED capable of emitting light at more than 100 lumens per watt.

The reflector 120, which is located at the front side of the LED 110, may be perforated in a rear portion thereof with an insertion hole 124, into which the LED 110 is fitted. The reflector 120 has a semi-oval cross section suitable to enclose the LED 110 and is able to reflect light at an inner wall surface 122 thereof without loss of light.

Specifically, the reflector 120 acts to reflect and collimate light emitted laterally from the LED 110, so as to direct parallel light forward.

The lens 220 is configured to be seated on the inner wall surface 122 of the reflector 120, through which all light emitted from the LED 110 is directed straightly, or is refracted.

Specifically, the lens 220 generally has a circular cone shape, and a cylindrical hole 227 is defined in the center of a front portion of the lens 220. The cylindrical hole 227 functions to guide light, emitted forward from the LED 110, so as to be collimated in parallel, rather than being diffused. The light, which is emitted laterally from the LED 110 and is reflected forward by the reflector 120, is directed to the outside by way of a front surface 225 of the lens 220.

In the light emitting unit for use in a lighting device in accordance with the present invention, the front surface of the lens may have a convexly-curved or a concavely-curved shape.

In an arrangement that does not form part of the present invention wherein the front surface of the lens has a flat-plane shape, the flat-plane-shaped front surface causes the light, reflected by the reflector 120 so as to be directed forward in parallel, to be continuously directed straight without refraction. In an embodiment of the invention wherein the front surface of the lens has a convexly curved shape like a convex lens, the convexly-curved front surface causes the reflected light to converge to a position at a predetermined distance depending on a centripetal radius of the lens. On the other hand, in a further embodiment wherein the front surface of the lens has a concavely curved shape like a concave lens, the concavely-curved front surface causes the reflected light to be diffused outward over a wide range. These various embodiments with respect to a variety of lenses for use in the lighting device in accordance with the present invention will now be described in more detail.

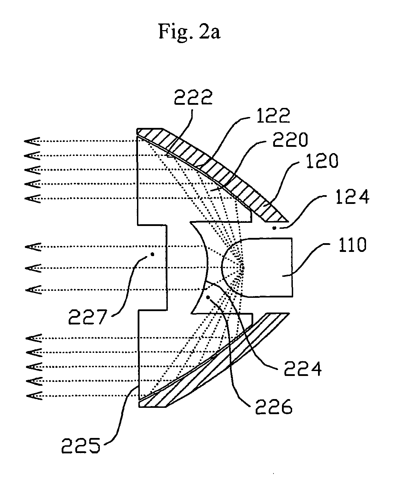

FIG. 2A is a sectional view illustrating an assembled light emitting unit in which a lens having a flat-plane-shape front surface is used in accordance with an arrangement that does not form part of the present invention.

Referring to FIG. 2A, light emitted from the LED 110 is divided into light, which is emitted forward to a convex portion 224 of the lens 220 located close to the front side of the LED 110, and light which is emitted laterally from the LED 110 to thereby be reflected by the inner wall surface 122 of the reflector 120.

The light, emitted forward from the LED 110, is first refracted by the convex portion 224 inside a light source hole 226 of the lens 220. The refracted light is collimated in parallel, so as to be directed straight through the cylindrical hole 227 in front of the convex portion 224.

On the other hand, the light, emitted laterally from the LED 110, is reflected by the inner wall surface 122 of the reflector 120 after passing through the light source hole 226 without refraction. Then, the light is finally refracted at an outer inclined portion 122 of the lens 220, so as to be directed forward of the lens 220 by way of the flat-plane-shaped front surface 225.

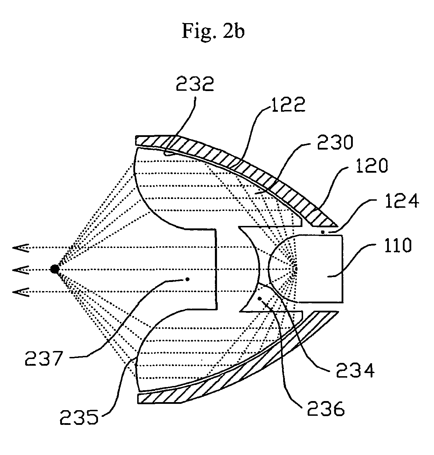

FIG. 2B is a sectional view illustrating an assembled light emitting unit in which a lens having a convexly-curved front surface is used in accordance with an embodiment of the present invention.

Referring to FIG. 2B, when a lens 230 has a convexly-curved front surface 235 similar to a convex lens, light reflected by the inner wall surface 122 of the reflector 120 is refracted at an outer inclined portion 232 and at the convexly-curved front surface 235 of the lens 230, repeatedly, thereby converging to a position of a predetermined distance in front of the lens 230.

In this case, to allow the converged light to intersect the light having passed through a convex portion 234 of the lens 230 at a predetermined position, an outer diameter of the front surface 235 and an inner diameter of the center cylindrical hole 237 of the lens 230 are adjustable.

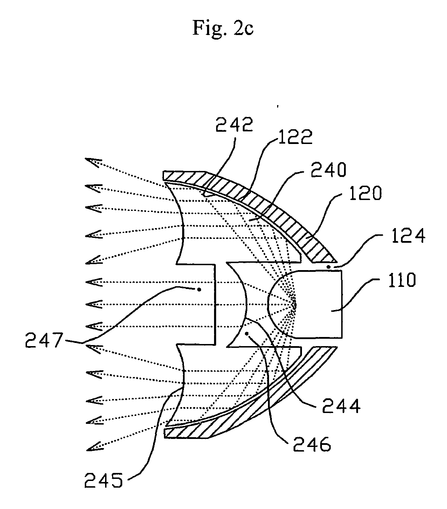

FIG. 2C is a sectional view illustrating an assembled light emitting unit in which a lens having a concavely curved front surface is used in accordance with a further embodiment of the present invention.

Referring to FIG. 2C, when a lens 240 has a concavely curved front surface 245 similar to a concave lens, light reflected by the inner wall surface 122 of the reflector 120 is diffused outward while passing through an outer inclined portion 242 as well as the concavely-curved front surface 245 of the lens 240.

In this case, the light emitted from the LED 110 can be used to effectively illuminate a wide region in front of the lens 240.

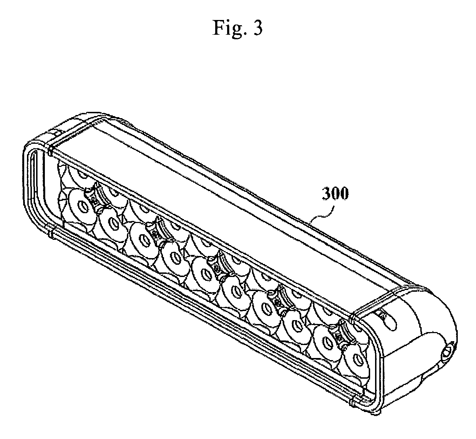

FIG. 3 is a perspective view illustrating the entire configuration of a bar-shaped LED lighting device in accordance with an arrangement that does not form part of the present invention.

Referring to FIG. 3, the lighting device is a bar-shaped LED lighting device 300, wherein a plurality of light emitting units is coupled to have a horizontally-elongated bar-shaped arrangement and each light emitting unit consists of the high-output LED 110, reflector 120 and any one lens selected from various shapes of lenses.

For example, as shown in the drawing, when the light emitting units are arranged in 2-rows horizontally and 10-rows vertically, the resulting lighting device exhibits a higher brightness than that of a conventional halogen lamp.

As will be appreciated, the present arrangement enables fabrication of lighting devices for various applications by changing the number or arrangement of light emitting units, each of which consists of the LED 110, reflector 120 and any one of the various shapes of lenses 220, 230 and 240.

Further, in the configuration of the respective lenses 220, 230 and 240 according to the present arrangement, when the outer inclined portions 222, 232 and 242 of the respective lenses 220, 230 and 240 are subjected to reflective treatment using mercury, the lenses 220, 230 and 240 may act to directly reflect light without the reflector 120.

As apparent from the above description, according to the present arrangement, by changing the number and arrangement of light emitting units constituting a lighting device, the resulting lighting device has a variety of applications and shapes of lighting devices including auxiliary headlamps of vehicles, etc.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A bar-shaped LED lighting device comprising:
a Light Emitting Diode (LED) (110) to emit light;
a semi-oval reflector (120) to reflect and collimate the light, emitted laterally from the LED (110), so as to direct parallel light forward; and
a lens (230, 240) configured to be inserted into the reflector (120) and having a center light source hole (236, 246) defined in a rear portion thereof and a cylindrical hole (237, 247) defined in a front portion thereof, the light source hole (236, 246) being defined with a convex portion (234, 244), in the form of a convex lens, at a position thereof opposite the LED (110), the convex portion (234, 244) serving to refract and collimate the light, emitted forward from the LED (110), to direct parallel light to the outside through the cylindrical hole (237, 247) in front of the convex portion (234, 244);
**characterized in that**
the front surface of said lens (230) around said hole (236) takes the form of a convexly-curved front surface (235) of a convex lens type,
or
the front surface of said lens (230) around said hole (246) takes the form of a concavely-curved front surface (245) of a concave lens type.

## Patentansprüche

1. Stabförmige LED-Beleuchtungsvorrichtung, umfassend:
eine Licht emittierende Diode (LED) (110), um Licht zu emittieren;
einen halbovalen Reflektor (120), um das von der LED (110) lateral emittierte Licht zu reflektieren und zu kollimieren, um paralleles Licht nach vorne zu lenken; und
eine Linse (230, 240), die zum Einsetzen in den Reflektor (120) ausgestaltet ist und ein zentrales Lichtquellenloch (236, 246), das in einem hinteren Abschnitt von dieser definiert ist, und ein zylindrisches Loch (237, 247) aufweist, das in einem vorderen Abschnitt von dieser definiert ist, wobei das Lichtquellenloch (236, 246) mit einem konvexen Abschnitt (234, 244) in der Form einer konvexen Linse an einer Position davon gegenüber der LED (110) definiert ist, wobei der konvexe Abschnitt (234, 244) dazu dient, das von der LED (110) nach vorne emittierte Licht zu brechen und zu kollimieren, um paralleles Licht durch das zylindrische Loch (237, 247) vor dem konvexen Abschnitt (234, 244) nach außen zu lenken;
**dadurch gekennzeichnet, dass**
die Frontfläche der Linse (230) um das Loch (236) herum die Form einer konvex gekrümmten Frontfläche (235) eines konvexen Linsentyps annimmt,
oder
die Frontfläche der Linse (230) um das Loch (246) herum die Form einer konkav gekrümmten Frontfläche (245) eines konkaven Linsentyps annimmt.

## Revendications

1. Dispositif d'éclairage à DEL en forme de barre comprenant :
une diode électroluminescente (DEL) (110) afin d'émettre de la lumière ;
un réflecteur semi-ovale (120) afin de réfléchir et collimater la lumière, émise latéralement par la DEL (110), de façon à diriger la lumière parallèle vers l'avant ; et
une lentille (230, 240) configurée pour être insérée dans le réflecteur (120) et ayant un trou de source de lumière central (236, 246) défini dans sa portion arrière et un trou cylindrique (237, 247) défini dans sa portion avant, le trou de source de lumière (236, 246) étant défini avec une portion convexe (234, 244), sous la forme d'une lentille convexe, au niveau d'une position de celle-ci opposée à la DEL (110), la portion convexe (234, 244) servant à réfracter et collimater la lumière, émise vers l'avant par la DEL (110), afin de diriger la lumière parallèle vers l'extérieur à travers le trou cylindrique (237, 247) devant la portion convexe (234, 244) ;
**caractérisé en ce que**
la surface avant de ladite lentille (230) autour dudit trou (236) prend la forme d'une surface avant incurvée de façon convexe (235) d'un type de lentille convexe,
ou
la surface avant de ladite lentille (230) autour dudit trou (246) prend la forme d'une surface avant incurvée de façon concave (245) d'un type de lentille concave.
